# EUROPÄISCHE PATENTSCHRIFT

(11) **EP 0 711 897 B1**
(45) Veröffentlichungstag und Bekanntmachung des Hinweises auf die Patenterteilung: **19.01.2000**
(21) Anmeldenummer: 95113357.8
(22) Anmeldetag: 25.08.1995
(51) Int. Cl.: E05D 5/06

(54) **Vorrichtung zum Ausüben bzw. Hervorbringen einer Befestigungsvorspannung oder Andrückkraft auf bzw. an Beschlagteile(n)**
Device for exerting resp. producing a pre-stress fixing or tightening force on, resp. at fitting elements
Dispositif pour exercer resp. produire une fixation à pré-tension ou force de serrage sur, resp. à des éléments de ferrure

(30) Priorität: 08.11.1994 DE 9417867 U
(43) Veröffentlichungstag der Anmeldung: 15.05.1996
(73) Patentinhaber: SIEGENIA-FRANK KG, 57074 Siegen (DE)
(72) Erfinder: Brück, Günter, D-57555 Mudersbach (DE); Graumann, Ingo, D-57250 Netphen (DE); Schäfer, Karl, D-57234 Wilnsdorf (DE)

(56) Entgegenhaltungen:
- US-A- 4 832 388

## Beschreibung

Die Erfindung betrifft eine Vorrichtung zum selbsttätigen Ausüben bzw. Hervorbringen einer gerichteten Befestigungsvorspannung und/oder Andrückkraft auf bzw. an Beschlagteile(n), durch sie quer zu ihrer Abstützebene durchsetzende Befestigungselemente, insbesondere Schrauben, wobei als Durchlässe für die Befestigungselemente in den Beschlagteilen Senklöcher vorgesehen sind und die Befestigungselemente dazu passende Senkköpfe als Anzugsmittel aufweisen, welche in ihrer Befestigungs-Endlage mit ihren Umfangsflächen vollflächig an den Begrenzungsumfangsflächen der Senklöcher anliegen.

Beim Anbringen von Beschlagteilen an Bauelementen, und zwar insbesondere solchen zur Bildung fester oder beweglicher Abschlüsse für Öffnungen in Gebäuden od. dgl., z.B. an den Flügeln und Rahmen von Türen, Fenstern, Fensterläden, Toren od. dgl., besteht oft die Notwendigkeit, auf diese Beschlagteile eine gerichtete Befestigungsvorspannung und/oder Andrückkraft auszuüben, um im fertig angeschlagenen Zustand eine vorbestimmte Befestigungsposition derselben zu erhalten und sicherzustellen.

Diesen Anforderungen unterliegen insbesondere solche Beschlagteile, die in den Eckzonen der Bauelemente, beispielsweise an den Flügel- und/oder Rahmenecken von Türen, Fenstern, Fensterläden, Toren od. dgl. angeschlagen werden und dabei eine exakt bestimmte Position zum Scheitel der betreffenden Ecke einnehmen müssen.

Der Effekt des Ausübens bzw. Hervorbringens einer gerichteten Befestigungsvorspannung und/oder Andrückkraft ist bisher in der Regel dadurch herbeigeführt worden, daß bei der Durchführung der Anschlagarbeiten jeweils mindestens eines der anzubringenden Befestigungselemente (Schraube) mit gegen die Normalrichtung geneigter Schaftachse im Senkloch angesetzt und eingetrieben wird. Beim Auftreffen der Umfangsflächen seines Senkkopfes auf die Begrenzungsumfangsfläche des Senkloches erzeugt es dann eine seitwärts gerichtete Kraftkomponente in einer bestimmten Vorspann- bzw. Andrückrichtung.

Abgesehen davon, daß eine solche Behandlungsweise (Schrägeintreiben) der Befestigungselemente praktisch nur individuell, insbesondere durch eine manuelle Werkzeugführung bewirkt werden kann, besteht dabei leicht die Möglichkeit, daß durch falsche Wahl der Neigungsrichtung des betreffenden Befestigungselementes unerwünschte Anschlagfehler vorkommen. Außerdem gelangt in jedem Falle die Ebene der Endfläche des Senkkopfes am Befestigungselement relativ zur Hauptebene des befestigten Beschlagteils in eine unerwünschte Schräglage. Diese wirkt nicht nur ästhetisch unschön, sondern birgt auch ein Verletzungsrisiko in sich, weil gewisse Kantenbereiche des Senkkopfes die äußere Ebene des befestigten Beschlagteils überragen können und dort in unerwünschter Weise eine schneidenartige Wirkung entfalten.

In Erkenntnis dieser Unzulänglichkeiten zielt die Erfindung auf die Schaffung einer gattungsgemäßen Vorrichtung zum selbsttätigen Ausüben bzw. Hervorbringen einer gerichteten Befestigungsvorspannung und/oder Andrückkraft ab, die ohne ein gegen die Normalrichtung geneigtes Ansetzen der Befestigungselemente auskommt und daher auch ein automatisiertes bzw. maschinelles Eintreiben dieser Befestigungselemente (mit Hilfe üblicher Anschlagmaschinen) problemlos zuläßt.

Zielgerichtet wird die Lösung dieser Aufgabe nach der Erfindung dadurch erreicht,
daß mindestens eines der Senklöcher an seinem engen Ende exzentrisch zu der Längsachse des Versenkes durch eine zungenartig vorspringende, dünne Materialschicht bis auf eine an den Kernquerschnitt des Schaftes der Befestigungselemente (Schrauben) angepaßte Öffnungsweite eingeengt ist,
und daß dabei die dünne Materialschicht durch den Senkkopfkonus aus dem Senkloch heraus verdrängbar bzw. plastisch verformbar ist.

Durch die Benutzung einer diese Merkmale aufweisenden Vorrichtung erwächst der Vorteil, daß ein mit seiner Schaftachse in Normalrichtung angesetztes und einzutreibendes Befestigungselement (Schraube) zu Beginn des jeweiligen Befestigungs- bzw. Anschlagvorgangs zwangsläufig in einem vorgegebenen Ausmaß eine seitliche Versetztlage (Exzentrizität) zur Senklochachse einnimmt, bis der Senkkopf des Befestigungselementes in das Senkloch des Beschlagteils eindringt und über seine Umfangsflächen mit den Begrenzungsumfangsflächen des Senklochs zunächst nur exzentrisch in Kontakt kommt.

Im Verlauf des weiteren Eindringens des Senkkopfes in das Senkloch findet dann aber ein zwangsläufiges Verschieben des Beschlagteiles unter fortwährender Verminderung der Exzentrizität statt, während die dünne Materialschicht durch den Senkkopfkonus aus dem Senkloch heraus verdrängt bzw. plastisch verformt wird. Diese Verdrängung bzw. plastische Verformung der dünnen Materialschicht erfolgt dabei so lange, bis die Umfangsflächen des Senkkopfes insgesamt mit den Begrenzungsumfangsflächen des Senkloches Kontakt haben und folglich die Senklochachse mit der Schaftachse des Befestigungselementes Fluchtlage einnimmt.

Im einfachsten Falle kann nach der Erfindung die zungenartig vorspringende Materialschicht am unteren Ende des Senkloches aus einem durch das Eindrücken des Senkloches verdrängten Werkstoffanteil des Beschlagteils gebildet werden. Dabei hat es sich bewährt, wenn erfindungsgemäß die dünne Materialschicht und die hieran anschließende Durchlaßöffnung jeweils eine etwa halbkreisförmige Umrißbegrenzung haben.

Selbstverständlich ist auch die Möglichkeit offen, aus Metall-Druckguß oder Kunststoff-Spritzguß bestehende Beschlagteile erfindungsgemäß auszustatten. In diesem Falle läßt sich die exzentrisch zur Längsachse des Versenkes zungenartig vorspringende Materialschicht durch eine entsprechende Ausgestaltung des Druckgieß- oder Spritzguß-Werkzeuges bilden.

An einem in der Zeichnung dargestellten Ausführungsbeispiel wird der Gegenstand der Erfindung nachfolgend ausführlich erläutert. Es zeigt
- Fig. 1: in räumlicher Ansichtsdarstellung ein Flügel-Scharnierteil für Fenster und Türen mit einem Befestigungs-Eckwinkel,
- Fig. 2: das Flügelscharnierteil nach Fig. 1 in einer Unteransicht entsprechend der Pfeilrichtung II in Fig. 1,
- Fig. 3: in Ansicht von vorne das der Eckzone eines Fensters zur Bildung eines Drehkipp-Eckgelenkes zugeordnete Flügel-Scharnierteil nach Fig. 1,
- Fig. 4: in stark vergrößertem Maßstab einen Schnitt entlang der Linie IV-IV durch den unteren waagerechten Schenkel des Befestigungswinkels am Flügel-Scharnierteil nach Fig. 2 zu Beginn seines durch Benutzung einer Senkkopfschraube bewirkten Befestigungsvorgangs und
- Fig. 5: eine der Fig. 4 entsprechende Schnittdarstellung, jedoch nach Vollendung des Befestigungsvorgangs.

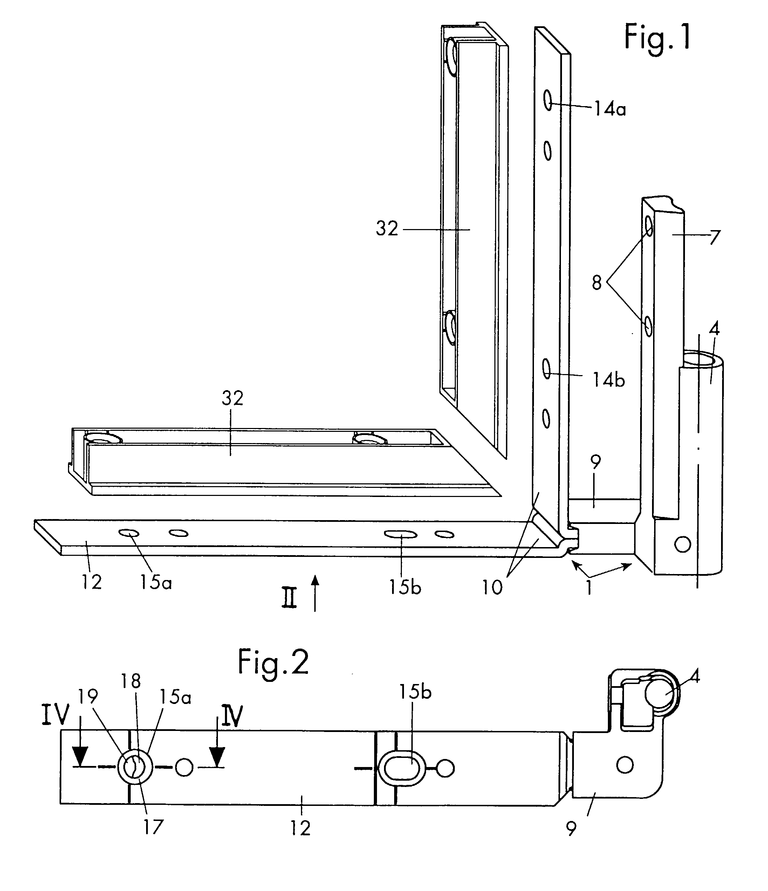

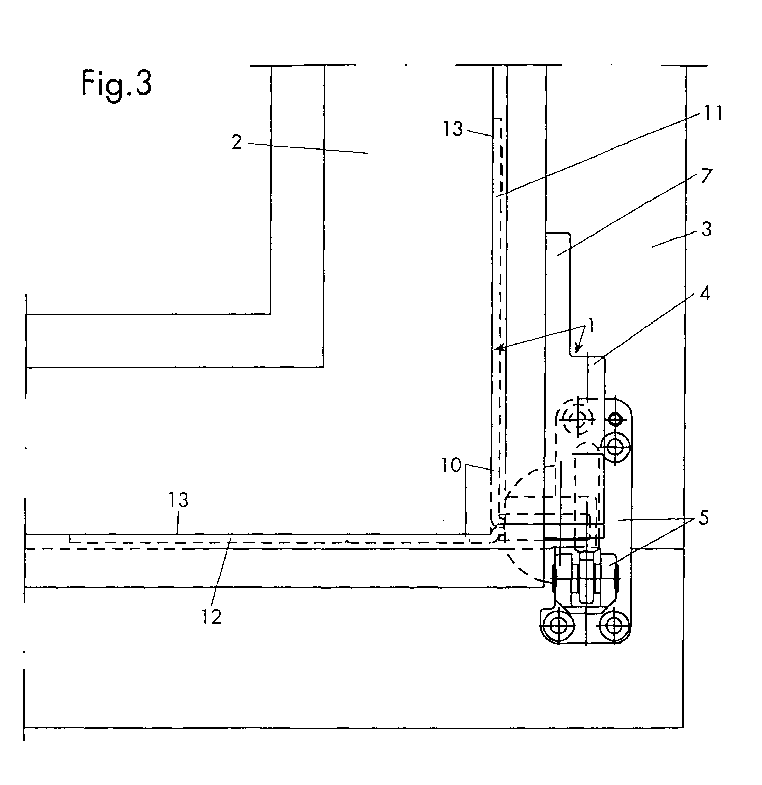

Die Fig. 1 der Zeichnung zeigt in räumlicher Darstellung ein Flügel-Scharnierteil 1, das insbesondere an Fenstern und Türen od. dgl. zur Abstützung eines Flügels 2 am feststehenden Rahmen 3 benutzt werden kann, wie das in Fig. 3 der Zeichnung zu sehen ist. Dabei wirkt dieses Flügel-Scharnierteil Rahmen-Scharnierteil 1 über eine Gelenkhülse 4 mit einem als 5 am Blendrahmen 3 montierten Ecklagerbock zusammen, wie das ebenfalls aus Fig. 3 ersichtlich ist.

Mit dem Flügel 2 wird das Flügel-Scharnierteil 1 einerseits über einen gegen die Uberschlags-Umfangsfläche 6 des Flügels 2 anliegenden Verlängerungslappen 7 verbunden. Dieser schließt sich nach oben einstückig an die Gelenkhülse 4 an und weist mindestens zwei Querlöcher 8 auf, die von (nicht gezeigten) Befestigungsschrauben durchsetzt werden können.

Andererseits steht über einen Ausleger 9 mit dem unteren Ende der Gelenkhülse 4 des Flügel-Scharnierteils 1 ein Befestigungswinkel 10 in Verbindung, der einen aufrechten Schenkel 11 und einen waagerechten Schenkel 12 hat. Mit beiden Schenkeln 11 und 12 wird der Befestigungswinkel 10 gegen die Falzumfangsflächen 13 des Flügels 2 zur Anlage gebracht, wie das in Fig. 3 der Zeichnung erkennbar gemacht wird.

Der Schenkel 11 des Befestigungswinkels 10 ist mit mehreren Querlöchern 14a und 14b ausgestattet, während sein Schenkel 12 mehrere Querlöcher 15a, 15b enthält. Alle diese Querlöcher 14a, 14b und 15a, 15b sind als sich nach der Außenseite der Schenkel 11 und 12 erweiternde Senklöcher ausgeführt, so daß diese sich zur Aufnahme der Senkkköpfe von als Befestigungselemente verwendeten Senkschrauben eignen, wie sie üblicherweise zur Befestigung von Beschlagteilen an Fenster- und/oder Türen-Bauelementen zum Einsatz gelangen.

Für den vorliegenden Fall ist es von wesentlicher Bedeutung, daß mindestens eines der Senklöcher in einem der Schenkel 11 und 12 des Befestigungswinkels 10 eine besondere Ausgestaltung erhält. Diese ist aus den Fig. 2, 4 und 5 der Zeichnung ersichtlich. Bei dem als besonders gestaltetes Senkloch ausgeführten Querloch handelt es sich z.B. um das Querloch 15a im unteren waagerechten Schenkel 12 des Befestigungswinkels 10.

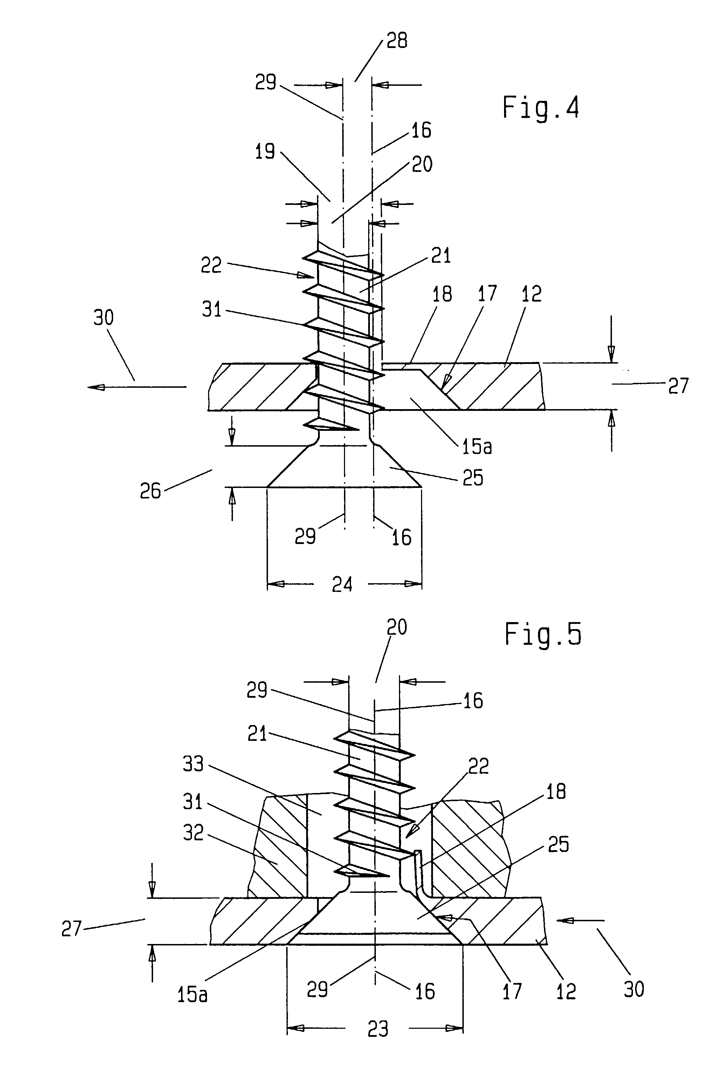

Die Besonderheit dieses als Senkloch gestalteten Querloches 15a besteht darin, daß es an seinem der inneren Breitseite des waagerechten Schenkels 2 zugewendeten Ende exzentrisch zur Längsachse 16-16 seines Versenkes 17 durch eine zungenartig parallel zur Hauptebene des Schenkels 12 vorspringende, dünne Materialschicht 18 eingeengt ist. Dabei wird der Durchlaßquerschnitt 19 des Querloches 15a im Bereich der Materialschicht 18 bis etwa auf eine an den Kernquerschnitt 20 des Schaftes 21 der Befestigungsschraube 22 angepaßte Öffnungsweite eingeengt, wie das deutlich in Fig. 4 der Zeichnung zu sehen ist.

Der größte Durchmesser 23 des Versenkes 17 im Querloch 15a ist an den größten Durchmesser 24 des Senkkopfes 25 der Befestigungsschraube 22 angepaßt (vergl. Fig. 4 und 5). Die Höhe 26 des Senkkopfes 25 der Befestigungsschraube 22 ist etwas größer bemessen als die Materialdicke 27 am Schenkel 12 des Befestigungswinkels 10 (vergl. Fig. 4 und 5).

Wird die Befestigungsschraube 22 mit ihrem Schaft 21 in den Durchlaßquerschnitt 19 des Versenkes 17 eingeführt, dann bestimmt dessen Kernquerschnitt 20 ein Maß 28 der Exzentrizität zwischen der Längsachse 16-16 des Versenkes 17 und der Längsachse 29-29 des Schaftes 21 dieser Befestigungsschraube 22, wie das deutlich aus Fig. 4 der Zeichnung ersichtlich ist. Um dieses Maß 28 der Exzentrizität ist dabei auch der Senkkopf 25 der Befestigungsschraube 22 mit seinen konischen Umfangsflächen seitlich versetzt zu den konischen Begrenzungsumfangsflächen des Versenkes 17 im Querloch 15a ausgerichtet, wie das wiederum Fig. 4 der Zeichnung erkennen läßt.

Wird nun die Befestigungsschraube 22 aus der der Fig. 4 entnehmbaren Stellung weiter in Richtung ihrer Längsachse 29-29 eingedreht, dann trifft sie mit den konischen Umfangsflächen ihres Senkkopfes zunächst nur linienförmig auf die konischen Begrenzungsumfangsflächen des Versenkes 17. Sie übt dadurch eine in Pfeilrichtung 30 wirkende Kraftkomponente auf den waagerechten Schenkel 12 des Befestigungswinkels 10 aus. Infolgedessen wird mit dem weiteren Anziehen der Befestigungsschraube 22 der Schenkel 12 allmählich in Pfeilrichtung 30 von rechts nach links verschoben. Diese Verschiebung findet dabei so lange statt, bis der Senkkopf 25 der Schraube 22 mit seinen Umfangsflächen in Endlage vollflächig gegen die konischen Begrenzungsumfangsflächen des Versenkes 17 im Schenkel 12 angepreßt ist, wie das die Fig. 5 zeigt. In diesem Falle nehmen dann die Längsachse 16-16 des Versenkes 17 und die Längsachse 29-29 des Schaftes 21 der Befestigungsschraube 22 Fluchtlage ein, wie das aus Fig. 5 der Zeichnung hervorgeht.

Als Folge der erzwungenen Verschiebung des Schenkels 12 in Pfeilrichtung 30 wird unter der Krafteinwirkung des Senkkopfes 25 die dünne Materialschicht 15 durch Verbiegen aus dem Versenk 17 des Querloches 15a heraus verdrängt.

Insbesondere wird sie unter der gleichzeitigen Einwirkung der Gewindegänge 31 plastisch verformt, wie das in Fig. 5 der Zeichnung deutlich zu sehen ist. Liegt dabei der Schenkel 12 des Befestigungswinkels 10 mit seiner Innenseite unmittelbar vollflächig am Material des Fensterflügels od. dgl. an, dann wird die dünne Materialschicht 18 unmittelbar in dieses Material hineingedrückt. Stützt sich hingegen der Schenkel 12 des Befestigungswinkels 10 mittelbar über ein zwischengeschaltetes Distanzstück 32 gegen den Flügel ab, dann kann die dünne Materialschicht 18 des Schenkels 12 auch in einen Durchlaß 33 des betreffenden Distanzstückes 32 abgebogen werden.

Das Maß 28 der Exzentrizität zwischen der Längsachse 16-16 des Versenkes 17 und der Längsachse 29-29 des Durchlaßquerschnitts 19 für den Schaft 21 der Befestigungsschraube 22 wird in jedem Falle so groß gewählt, daß die erzwungene Verschiebung des Schenkels 12 in Pfeilrichtung 30 mit Sicherheit dazu führt, daß auch der Schenkel 11 des Befestigungswinkels 10 an der ihm zugeordneten Falzumfangsfläche 13 des Flügels 2 zur Stützanlage gebracht wird.

Wenn die Schenkel 11 und 12 des Befestigungswinkels 10 aus einem im Querschnitt flach-rechteckigen Bandmaterialstreifen, z.B. Stahl-Flachband, gefertigt werden, ist es vorteilhaft, die zungenartig vorspringende Materialschicht 18 aus einem durch das Eindrücken des Versenkes 17 verdrängten Werkstoffteil des betreffenden Beschlagteils zu bilden. Dabei können die dünne Materialschicht 18 und der neben ihr verbleibende Durchlaßquerschnitt 19 des Versenkes 17 jeweils etwa eine halbkreisförmige Umrißbegrenzung haben.

Bei Herstellung des Befestigungswinkels 10 aus Metall-Druckguß oder Kunststoff-Spritzguß ist es hingegen möglich, die dünne Materialschicht 18 neben dem Durchlaßquerschnitt 19 des Versenkes 17 unmittelbar im Formwerkzeug herzustellen.

### Liste der Bezugszeichen

- 1: Flügel-Scharnierteil
- 2: Flügel
- 3: feststehender Rahmen
- 4: Gelenkhülse
- 5: Rahmen-Scharnierteil/Ecklagerbock
- 6: Überschlags-Umfangsfläche des Flügels 2
- 7: Verlängerungslappen der Gelenkhülse 4
- 8: Querlöcher im Verlängerungslappen 7
- 9: Ausleger der Gelenkhülse 4
- 10: Befestigungswinkel des Flügel-Scharnierteils 1
- 11: aufrechter Schenkel des Befestigungswinkels 10
- 12: waagerechter Schenkel des Befestigungswinkels 10
- 13: Falzumfangsflächen des Flügels 2
- 14a, 14b: Querlöcher im aufrechten Schenkel 11
- 15a, 15b: Querlöcher im waagerechten Schenkel 12
- 16-16: Längsachse des Versenkes 17
- 17: Versenk des Querloches 15a
- 18: dünne Materialschicht am Versenk 17
- 19: Durchlaßquerschnitt des Versenkes 17
- 20: Kernquerschnitt des Schaftes 21
- 21: Schaft der Befestigungsschraube 22
- 22: Befestigungsschraube
- 23: größter Durchmesser des Versenkes 17
- 24: größter Durchmesser des Senkkopfs 25
- 25: Senkkopf der Befestigungsschraube 22
- 26: Höhe des Senkkopfes 25
- 27: Materialdicke des Schenkels 12
- 28: Maß der Exzentrizität
- 29-29: Längsachse des Schaftes 21
- 30: Pfeilrichtung
- 31: Gewindegänge der Befestigungsschraube 22
- 32: Distanzstück
- 33: Durchlaß im Distanzstück

## Patentansprüche

1. Vorrichtung zum selbsttätigen Ausüben bzw. Hervorbringen einer gerichteten Befestigungsvorspannung und/oder Andrückkraft auf bzw. an Beschlagteile(n), durch sie quer zu ihrer Abstützebene durchsetzende Befestigungselemente, insbesondere Schrauben, wobei als Durchlässe für die Befestigungselemente in den Beschlagteilen Senklöcher vorgesehen sind und die Befestigungselemente dazu passende Senkköpfe als Anzugsmittel aufweisen, welche in der Befestigungs-Endlage mit ihren Umfangsflächen vollflächig an den Begrenzungs-Umfangsflächen der Senklöcher anliegen,
**dadurch gekennzeichnet**,
daß mindestens eines der Senklöcher (z.B. 15a) an seinem engen Ende exzentrisch zur Längsachse (16-16) des Versenkes (17) durch eine zungenartig vorspringende dünne Materialschicht (18) bis auf eine an den Kernquerschnitt (20) des Schaftes (21) der Befestigungselemente (Schrauben 22) angepaßte Öffnungsweite (Durchlaßquerschnitt 19) eingeengt ist,
und daß dabei die dünne Materialschicht (18) durch den Senkkopfkonus aus dem Versenk (17) heraus verdrängbar bzw. plastisch verformbar ist.

2. Vorrichtung nach Anspruch 1,
**dadurch gekennzeichnet**,
daß die zungenartig vorspringende Materialschicht (18) aus einem durch Eindrücken des Senklochs verdrängten Werkstoffanteil des Beschlagteils (12) gebildet ist.

3. Vorrichtung nach einem der Ansprüche 1 und 2,
**dadurch gekennzeichnet**,
daß die dünne Materialschicht (18) und die hieran anschließende Durchlaßöffnung (Durchlaßquerschnitt) (19) jeweils eine etwa halbkreisförmige Umrißbegrenzung haben.

4. Vorrichtung nach einem der Ansprüche 1 und 3,
**dadurch gekennzeichnet**,
daß die zungenartig vorspringende Materialschicht (18) aus einem Druckguß- oder Spritzguß-Werkstoffanteil des Beschlagteils (12) gebildet ist.

## Claims

1. A device for automatically exerting or producing a directed fastening prestress and/or compressive force on or at one or more fittings, via fastening elements, particularly screws, which extend through them transversely to the plane against which they abut, passages in the form of countersunk holes being provided for the fastening elements in the fittings, and the fastening elements having corresponding tightening means in the form of countersunk heads, the peripheral surfaces of which abut and are flush with the peripheral boundary surfaces of the countersunk holes when fastened in the final position,
characterised in that
at least one of the countersunk holes (e.g. 15a) at its narrow end, eccentrically relatively to the longitudinal axis (16 - 16) of the countersink (17), is constricted by a thin projecting tongue-like layer of material (18) to an opening width (passage cross-section 19) matching the core cross-section (20) of the shank (21) of the fastening elements (screws 22), and in that in the process the thin layer of material (18) is plastically deformable or displaceable out of the countersink (17) by the conical countersunk head.

2. A device according to claim 1, characterised in that the tongue-like projecting layer of material (18) is formed from a component of the material of the fitting (12) displaced by pressing in the countersunk hole.

3. A device according to claim 1 or 2, characterised in that the thin layer of material (18) and the adjoining passage opening (passage cross-section) (19) each have an approximately semicircular boundary.

4. A device according to claim 1 or claim 3,
characterised in that the tongue-like projecting layer of material (18) is made from a die-cast or injection-moulded component of the material of the fitting (12).

## Revendications

1. Dispositif pour l'exercice, respectivement la production automatique d'une précontrainte de fixation et/ou une force de serrage dirigée sur, respectivement à des éléments de ferrure, lesquels sont traversés transversalement à leur plan d'appui par des éléments de fixation, en particulier des vis, des boutonnières étant prévues pour le passage des éléments de fixation et les éléments de fixation présentant comme moyens de serrage des têtes coniques qui s'adaptent dans ces boutonnières et reposent, en position finale de fixation, par leurs surfaces périphériques complètement sur les surfaces périphériques de délimitation des boutonnières,
caractérisé en ce que au moins une des boutonnières (par exemple la 15a) est fermée à son extrémité étroite de manière excentrée par rapport à l'axe longitudinal (16-16) du logement (17) par une mince couche de matière (18) faisant saillie comme une languette jusqu'à une largeur d'ouverture (section de passage 19) adaptée à la section de noyau (20) de l'axe (21) des éléments de fixation (vis 22), et en ce qu'en l'occurrence la mince couche de matière (18) peut être délogée du logement (17), respectivement déformée plastiquement par la tête conique.

2. Dispositif suivant la revendication 1, caractérisé en ce que la couche de matière (18) faisant saillie comme une languette est formée par une partie de matière de l'élément de ferrure (12) délogée par enfoncement de la boutonnière.

3. Dispositif suivant la revendication 1 ou 2, caractérisé en ce que la mince couche de matière (18) et l'ouverture de passage (section de passage) (19) adjointe à celle-ci ont respectivement un contour plus ou moins en forme de demi-cercle.

4. Dispositif suivant la revendication 1 ou 3, caractérisé en ce que la couche de matière (18) faisant saillie comme une languette est formée par une partie de matière de l'élément de ferrure (12) coulée sous pression ou moulée par injection.
